# EUROPÄISCHE PATENTSCHRIFT

(11) **EP 1 992 304 B1**
(45) Veröffentlichungstag und Bekanntmachung des Hinweises auf die Patenterteilung: **25.08.2010**
(21) Anmeldenummer: 07009562.5
(22) Anmeldetag: 12.05.2007
(51) Int. Cl.: A61C 8/00

(54) **Zahnimplantat, insbesondere aus einem Keramikmaterial**
Dental implant, in particular made of a ceramic material
Implant dentaire, en particulier en matériau céramique

(43) Veröffentlichungstag der Anmeldung: 19.11.2008
(73) Patentinhaber: Walther, Gerd Axel, Dr., 71034 Böblingen (DE)
(72) Erfinder: Walther, Gerd Axel, Dr., 71034 Böblingen (DE)
(74) Vertreter: Vetter, Hans

(56) Entgegenhaltungen:
- EP-A- 0 827 721
- EP-A1- 0 216 031
- WO-A-00/54696
- DE-A1- 19 635 619
- DE-A1-102005 013 200
- US-A- 5 197 881
- US-A1- 2005 202 371

## Beschreibung

Die Erfindung betrifft ein zweiteiliges Zahnimplantat, insbesondere aus einem Keramikmaterial, wie es beispielsweise in der DE 10 2005 006 979 A1 beschrieben ist.

Beim bekannten Zahnimplantat ist der Implantatpfosten durch entsprechende Formgebung zwar drehfest im Implantatkörper angeordnet, jedoch ist er in axialer Richtung gegen Herausziehen nicht formschlüssig, sondern mittels eines Klebers fixiert. Dies erweist sich in vielen Fällen als nachteilig.

Aus der EP 1186275 A1 ist zwar bereits ein zweiteiliges Zahnimplantat bekannt, bei dem der dort als Verbindungskörper bezeichnete Implantatpfosten in den Implantatkörper eingeschraubt ist, jedoch eignet sich eine derart feine Innenverschraubung z.B. nicht für keramische Zahnimplantate, sondern lediglich für metallische Zahnimplantate, insbesondere Titanimplantate. Die Herstellung von derart feinen Innengewinden für keramische Zahnimplantate ist technologisch problematisch.

Die WO-A-00 54 696 beschreibt ein Zahnimplantat mit einem Implantatkörper zum Verankern in einem Kieferknochen und mit einem in den Implantatkörper einsetzbaren Implantatpfosten. Der Implantatpfosten ist mittels einer als Steck-Drehverbindung ausgebildeten Renkverbindung im Implantatkörper verriegelbar. Der Implantatpfosten weist einen in den Implantatkörper einsteckbaren Halteabschnitt und einen aus dem Implantatkörper herausragenden Tragabschnitt auf. Der Halteabschnitt besitzt eine radial vorstehende Verriegelungselementanordnung, die durch eine Komplementärkontur des Implantatkörpers einführbar und dahinter durch eine Drehung verriegelbar ist.

Eine Aufgabe der vorliegenden Erfindung besteht darin, ein zweiteiliges Zahnimplantat, insbesondere aus einem Keramikmaterial oder einem anderen nichtmetallischen Material zu schaffen, bei dem der Implantatpfosten formschlüssig gegen Herausziehen gesichert im Implantatkörper verankerbar ist oder verankert ist, ohne dass ein Gewinde erforderlich wäre.

Diese Aufgabe wird erfindungsgemäß durch ein Zahnimplantat mit den Merkmalen des Anspruchs 1 gelöst.

Die erfindungsgemäße Verankerung des Implantatpfostens durch eine als Steck-Drehverbindung ausgebildete Renkverbindung stellt eine formschlüssige Verbindung zur Verhinderung eines Herausziehens dar und kann durch einen einfachen Steck-Drehvorgang um einen sehr kleinen Winkel hergestellt werden. Im Vergleich zu einem Gewinde kann eine solche Renkverbindung geometrisch gröber realisiert und dadurch technologisch leichter bewältigt werden, insbesondere in Verbindung mit zwei- oder mehrteiligen Zahnimplantaten, die wenigstens teilweise aus einem Keramikmaterial oder einem anderen nichtmetallischen Material bestehen, bei dem die Anbringung eines Innengewindes problematisch ist.

Der Implantatpfosten besitzt ferner einen in den Implantatkörper einsteckbaren Halteabschnitt zur Verankerung im Implantatkörper und einen aus dem Implantatkörper im eingesteckten Zustand herausragenden Tragabschnitt zur Aufnahme eines festsitzenden Zahnersatzes, wie einer Einzelkrone, eines Brückenpfeilers oder dergleichen.

Der Halteabschnitt des Implantatpfostens weist eine radial vorstehende Verriegelungselementanordnung auf, die durch eine Komplementärkontur des Implantatkörpers hindurch in diesen einführbar und durch Drehung hinter dieser Komplementärkontur verriegelbar ist.

Eine formschlüssige Verdrehsicherung ist dadurch realisiert, dass ein mit einem zu verankernden festsitzenden Zahnersatz verbundenes, eine Ausnehmung zur Aufnahme des Tragabschnitts des Implantatpfostens aufweisendes Kopplungsglied wenigstens einen zapfenartigen Vorsprung in axialer Richtung zum Eingriff in die Komplementärkontur des Implantatkörpers besitzt.

Durch die in den abhängigen Ansprüchen aufgeführten Maßnahmen sind vorteilhafte Weiterbildungen und Verbesserungen des im Anspruch 1 angegebenen Zahnimplantats möglich.

Die Verriegelungselementanordnung besitzt in einer zweckmäßigen Ausgestaltung wenigstens eine vorzugsweise symmetrisch verteilte Anzahl von Verriegelungszähnen, und die Komplementärkontur besitzt eine oder mehrere entsprechende Durchsteckausnehmungen. Hierdurch ist eine schnelle und einfache Verriegelung des Implantatpfostens im Implantatkörper bei relativ geringem Herstellungsaufwand möglich.

Die hinter der Komplementärkontur verriegelte Verriegelungselementanordnung ist zweckmäßigerweise als klemmende Verriegelung ausgebildet, das heißt, bei der Drehung verklemmen sich die Verriegelungszähne hinter der Komplementärkontur. Dies führt zu einer Verdrehsicherheit. Der wenigstens eine zapfenartige Vorsprung des Kopplungsgliedes besitzt zweckmäßigerweise eine zur Drehverriegelung des Implantatpfostens im Implantatkörper ausreichende Länge und kann gleichzeitig bevorzugt alle Durchsteckausnehmungen der Komplementärstruktur ausfüllen und dadurch verschließen.

Der in den Implantatkörper einsteckbare Halteabschnitt des Implantatpfostens und die entsprechende Aufnahme im Implantatkörper ist in der Einsteckrichtung bevorzugt konusförmig verjüngt, was die Halteverklemmung fördert und verbessert. Entsprechend ist auch der Tragabschnitt des Implantatpfostens zu seinem freien Ende hin konusförmig verjüngt, um eine entsprechende bessere Verankerung des Kopplungsglieds zu erreichen. Alternativ zur Konusgestalt sind jedoch auch andere Geometrien möglich, wie zylindrische oder nicht rotationssymmetrische Geometrien.

Zur Verankerung im Kiefer besitzt der Implantatkörper ein Außengewinde, vorzugsweise ein konisches und/oder selbstschneidendes Außengewinde, mit Hilfe dessen der Implantatkörper in eine entsprechende Bohrung im Kiefer eingeschraubt werden kann.

Das Zahnimplantat besteht in vorteilhafter Weise wenigstens zum Teil aus einem Keramikmaterial auf der Basis von Zirkonoxid oder einer Zirkonoxid/Aluminiumoxid-Mischung oder aus einem anderen nichtmetallischen Material, z.B. einem faserverstärkten Kunststoff auf Carbonbasis.

Ein Ausführungsbeispiel der Erfindung ist in der Zeichnung dargestellt und in der nachfolgenden Beschreibung näher erläutert. Es zeigen:

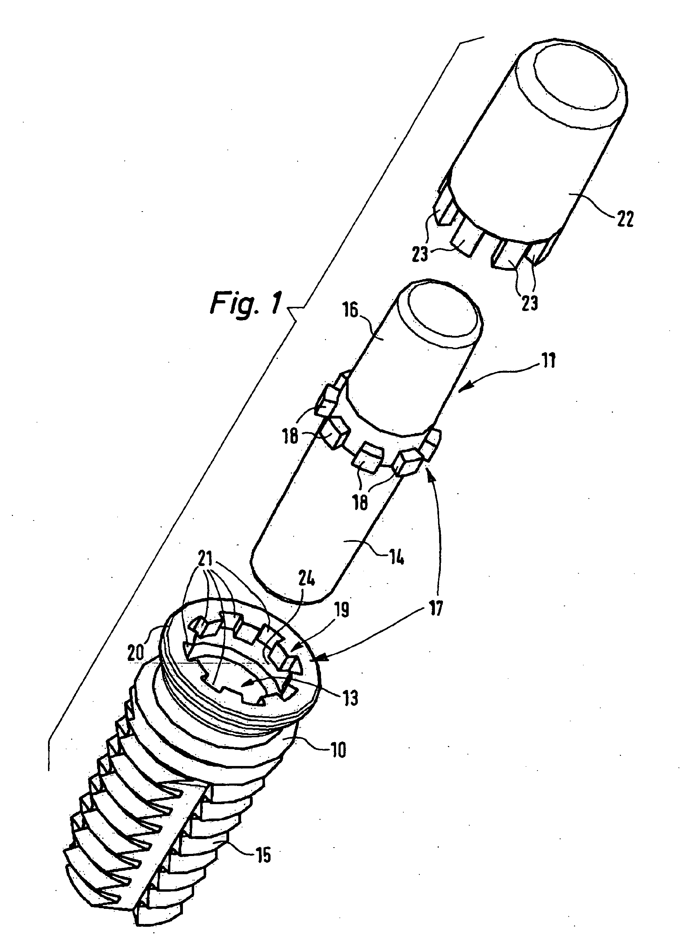

- Figur 1: eine perspektivische Explosionsdarstellung des aus Implantatkörper, Implantatpfosten und Kopplungsglied bestehenden Zahnimplantats als Ausführungsbeispiel der Erfindung,

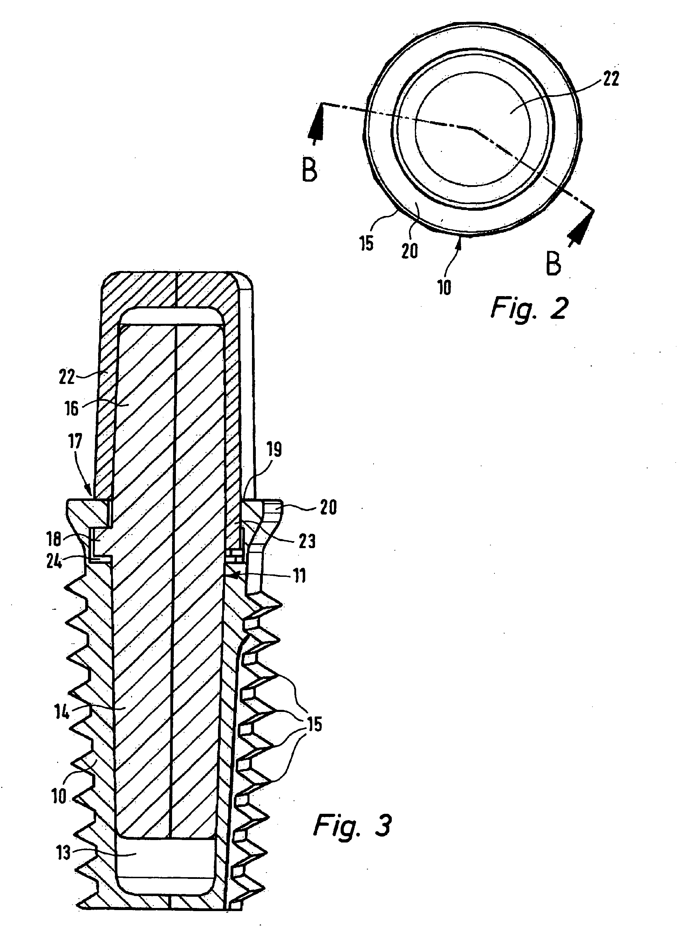

- Figur 2: die Draufsicht auf das zusammengefügte Zahnimplantat und
- Figur 3: eine Schnittdarstellung des zusammengefügten Zahnimplantats gemäß der Schnittlinie B-B in Figur 2.

Das in den Figuren als Ausführungsbeispiel dargestellte Zahnimplantat besteht aus einem in den menschlichen Kieferknochen einsetzbaren beziehungsweise einschraubbaren Implantatkörper 10, einem in diesem Implantatkörper 10 verrastbaren Implantatpfosten 11 und einem auf den Implantatpfosten 11 aufsetzbaren, mit einem nicht dargestellten zu verankernden festsitzenden Zahnersatz, wie einer Einzelkrone, einem Brückenpfeiler oder dergleichen, versehenen Kopplungsglied 22. Diese Bestandteile bestehen ganz oder zum Teil aus einem Keramikmaterial auf der Basis von Zirkonoxid oder einer Zirkonoxid/Aluminiumoxid-Mischung. Die aus dem Kieferknochen ganz oder teilweise herausragenden Bestandteile, insbesondere der Implantatpfosten 11 und ein noch zu beschreibendes Kopplungsglied 22, bestehen dabei bevorzugt aus dem Keramikmaterial oder einem nichtmetallischen Material, z.B. einem faserverstärkten Kunststoff auf Carbonbasis, nicht zuletzt auch aus optischen und ästhetischen Gründen, während der im Kieferknochen verankerte Implantatkörper 10 auch aus einem Metall, wie z.B. Titan, bestehen kann. Prinzipiell könnte aber auch das gesamte Zahnimplantat aus Metall bestehen.

Der Implantatkörper 10 besitzt ein sich konisch zum Inneren hin verjüngendes Sackloch 13 zur Aufnahme eines sich entsprechend verjüngenden Halteabschnitts 14 des Implantatpfostens 11. Umfangsseitig ist der Implantatkörper 10 mit einem konischen und/oder selbstschneidenden Außengewinde 15 versehen, das zum Einschrauben in eine Kieferbohrung dient. Anstelle eines Außengewindes 15 kann prinzipiell auch eine andere bekannte Außenstruktur zur Verankerung im Kieferknochen dienen.

Dem Halteabschnitt 14 des Implantatpfostens 11 fügt sich einstückig ein Tragabschnitt 16 an, der im in den Implantatkörper 10 eingesetzten Implantatpfosten aus dem Implantatkörper 10 herausragt und zur Halterung eines festsitzenden Zahnersatzes dient. Auch der Tragabschnitt 16 verjüngt sich zum freien Ende hin konusförmig, wie dies auch beim Halteabschnitt 14 der Fall ist. Alternativ zur Konusgestalt sind jedoch auch andere Geometrien möglich, wie zylindrische oder nicht rotationssymmetrische Geometrien

Zur Fixierung des Implantatpfostens 11 im Implantatkörper 10 dient eine als Steck-Drehverbindung ausgebildete Renkverbindung 17. Hierzu besitzt der Implantatpfosten 11 etwa mittig einen Kranz von radial abstehenden Verriegelungszähnen 18, während am offenen Endbereich des Implantatkörpers 10 eine Komplementärkontur 19 an einem Abschlussflansch 20 angeordnet ist, die entsprechende nutartige Durchsteckausnehmungen 21 besitzt. Zur gegenseitigen Verriegelung wird der Implantatpfosten 11 so in den Implantatkörper 10 eingeführt, dass die Verriegelungszähne 18 durch die Durchsteckausnehmungen 21 der Komplementärkontur 19 hindurchgeführt werden. Anschließend wird der Implantatpfosten 11 um einen Winkel gedreht, der im Wesentlichen der Winkelbreite eines Verriegelungszahns 18 entspricht. Hierdurch gelangen die Verriegelungszähne 18 hinter die Komplementärkontur 19, wobei der konusförmige Halteabschnitt 14 in Verbindung mit dem entsprechend gestalteten Sackloch 13 im Implantatkörper 10, den Verriegelungszähnen 18 und der Komplementärkontur 19 so geformt ist, dass bei dieser Drehung der Verriegelungszähne 18 in einer Ringnut 24 unmittelbar hinter der Komplementärkontur 19 eine Verklemmung stattfindet, d.h. der Halteabschnitt 14 des Implantatpfostens 11 wird dabei in das Sackloch 13 eingedrückt und verklemmt sich dadurch.

Beim dargestellten Ausführungsbeispiel sind acht gleichmäßig über den Umfang des Implantatpfostens 11 verteilte Verriegelungszähne 18 und eine entsprechende Anzahl von Durchsteckausnehmungen 21 vorgesehen. Diese Zahl kann natürlich variieren. Im einfachsten Fall genügt ein einziger Verriegelungszahn 18 und eine einzige Durchsteckausnehmung 21. Besser ist jedoch eine größere Zahl von Verriegelungszähnen 18, die zweckmäßigerweise gleichmäßig über den Umfang verteilt sein sollten. Weiterhin können die Verriegelungszähne 18 , die Durchsteckausnehmungen 21 und die Ringnut 24 auch eine von der rechteckigen bzw. quaderförmigen Gestalt oder Querschnittsgestalt abweichende Geometrie besitzen und z.B. halbrund, dreieckig, elliptisch oder dgl. ausgebildet sein.

Beim dargestellten Ausführungsbeispiel ist die Renkverbindung 17 am offenen Endbereich des Implantatkörpers 10 beziehungsweise am vom freien Endbereich abgewandten Endbereich des Halteabschnitts 14 des Implantatpfostens 11 angeordnet. Dabei ist es prinzipiell auch möglich, die Verriegelungszähne 18 an einer anderen Stelle des Halteabschnitts 14 anzuordnen, sodass die Renkverbindung 17 weiter im Inneren des Implantatkörpers 10 angeordnet ist.

Ein topfartig geformtes Kopplungsglied 22 wird im Zahnlabor mit einem festsitzenden Zahnersatz versehen, beziehungsweise dieses Kopplungsglied 22 wird in einen solchen festsitzenden Zahnersatz, wie eine Einzelkrone, einen Brückenpfeiler oder dergleichen, eingesetzt und verankert. Das mit dem nicht dargestellten Zahnersatz versehene Kopplungsglied 22 wird dann auf den konusförmigen Tragabschnitt 16 des Implantatpfostens 11 aufgesetzt, sodass dieser Tragabschnitt 16 in eine entsprechend geformte Ausnehmung des Kopplungsglieds 22 eingreift. Vom Rand des offenen Endes des Kopplungsglieds 22 aus erstrecken sich zapfenartige Vorsprünge 23 in axialer Richtung, die so geformt und angeordnet sind, dass sie in die Durchsteckausnehmungen 21 der Komplementärkontur 19 eingesteckt werden können. Ihre Länge ist so bemessen, dass sie noch zwischen die Verriegelungszähne 18 des Implantatpfostens 11 eingreifen und dadurch eine Drehung oder Rückdrehung des Implantatpfostens 11 blockieren. Der Implantatpfosten 11 ist dadurch sowohl in axialer Richtung als auch in Drehrichtung verriegelt.

Um die Verriegelung zu bewirken, könnte die Zahl der zapfenartigen Vorsprünge 23 auch geringer als die der Durchsteckausnehmungen 21 sein, jedoch ist eine gleiche Anzahl und eine gleiche Querschnittsgestalt zu bevorzugen, damit der Implantatkörper 10 völlig abgeschlossen ist und nichts eindringen kann.

Zur Anbringung beziehungsweise Montage des Zahnimplantats wird zunächst der Implantatkörper 10 mittels des Außengewindes 15 in an sich bekannter Weise in eine Bohrung im Kieferknochen eingeschraubt und dadurch verankert. Bis zur Anfertigung des festsitzenden Zahnersatzes wird der Implantatkörper 10 dann durch Einstecken und Drehen des Implantatpfostens 11 verschlossen, wobei bei Bedarf alternativ oder zusätzlich auch noch eine Abdeckkappe vorgesehen sein kann. Weiterhin kann danach noch ein entsprechend angepasster Gingivaformer und eventuell auch noch ein Provisorium eingesetzt bzw. angebracht werden. Nach Anfertigung der endgültigen Zahnersatzes, in dem das Kopplungsglied 22 verankert ist, wird dieser mittels des Kopplungsglieds 22 auf den Implantatpfosten 11 so aufgesteckt, dass die zapfenartigen Vorsprünge 23 die Durchsteckausnehmungen 21 passieren und zwischen den Verriegelungszähnen 18 positioniert werden, um den Implantatpfosten 11 zu verriegeln. Der konusförmige Tragabschnitt 16 des Implantatpfostens 11 tritt dabei in innigen Kontakt mit der entsprechenden Ausnehmung des Kopplungsglieds 22, wobei die Verankerung in an sich bekannter Weise durch Verkleben oder Zementieren mit üblichen Haftmitteln erfolgen kann oder es wird eine axiale oder radiale Schraub- oder Bolzenfixierung vorgenommen. Durch das Kopplungsglied 22, das als Serienteil hergestellt werden kann und bereits im Labor mit dem festsitzenden Zahnersatz verbunden wird, ist eine besondere Anpassung desselben beim Zahnarzt nicht mehr erforderlich, da das Kopplungsglied 22 optimal an den Implantatpfosten 11 angepasst ist.

In Abwandlung des dargestellten Ausführungsbeispiels kann der Implantatpfosten auch abgewinkelt ausgeführt sein, d.h. die Längsachse seines Halteabschnitts ist gegenüber der Längsachse seines Tragabschnitts um einen jeweils zur Anpassung der Lage des Zahnersatzes erforderlichen Winkel versetzt. Bei einer solchen Ausführung ist eine große Zahl von Verriegelungszähnen 18 von Vorteil, um die Positionierung vielseitiger und variabler vornehmen zu können.

Weiterhin kann der Tragabschnitt des Implantatpfostens auch eine von der Konusgestalt abweichende Gestalt besitzen und z.B. zylindrisch oder kugelartig ausgebildet sein. Die entsprechende Ausnehmung im Kopplungsglied muss selbstverständlich dieser jeweiligen Gestalt angepasst sein, wobei auch zusätzliche Mittel zur Verdrehsicherheit vorgesehen sein können.

## Patentansprüche

1. Zahnimplantat, insbesondere aus einem Keramikmaterial, mit einem Implantatkörper (10) zum Verankern in einem Kieferknochen und mit einem in den Implantatkörper (10) einsetzbaren und mittels einer als Steck-Drehverbindung ausgebildeten Renkverbindung (17) verriegelbaren Implantatpfosten (11) als Zahnträger, der einen in den Implantatkörper (10) einsteckbaren Halteabschnitt (14) und einen aus dem Implantatkörper (10) im eingesteckten Zustand herausragenden Tragabschnitt (16) besitzt, wobei der Halteabschnitt (14) des Implantatpfostens (11) eine radial vorstehende Verriegelungselementanordnung (18) aufweist, die durch eine Komplementärkontur (19) des Implantatkörpers (10) hindurch in diesen einführbar und durch Drehung hinter dieser Komplementärkontur (19) verriegelbar ist, **dadurch gekennzeichnet, dass** ein mit einem zu verankernden festsitzenden Zahnersatz verbundenes, eine Ausnehmung zur Aufnahme des Tragabschnitts (16) des Implantatpfostens (11) aufweisendes Kopplungsglied (22) wenigstens einen zapfenartigen Vorsprung (23) in axialer Richtung zum Eingriff in die Komplementärkontur (19) des Implantatkörpers (10) besitzt.

2. Zahnimplantat nach Anspruch 1, **dadurch gekennzeichnet, dass** die Ausnehmung zur Aufnahme des Tragabschnitts (16) des Implantatpfostens (11) konusförmig ausgebildet ist.

3. Zahnimplantat nach Anspruch 1 oder 2, **dadurch gekennzeichnet, dass** die Verriegelungselementanordnung (18) wenigstens eine, vorzugsweise eine symmetrisch verteilte Anzahl von Verriegelungszähnen (18) und die Komplementärkontur (19) eine oder mehrere entsprechende Durchsteckausnehmungen (21) besitzt.

4. Zahnimplantat nach einem der vorhergehenden Ansprüche, **dadurch gekennzeichnet, dass** die hinter der Komplementärkontur (19) verriegelte oder verriegelbare Verriegelungselementanordnung (18) als klemmende Verriegelung ausgebildet ist, insbesondere zur Verklemmung des Halteabschnitts (14) des Implantatpfostens (11) im Implantatkörper (10).

5. Zahnimplantat nach einem der vorhergehenden Ansprüche, **dadurch gekennzeichnet, dass** der wenigstens eine zapfenartige Vorsprung (23) eine zur Drehverriegelung des Implantatpfostens (11) im Implantatkörper (10) ausreichende Länge besitzt.

6. Zahnimplantat nach einem der vorhergehenden Ansprüche, **dadurch gekennzeichnet, dass** ein oder mehrere der zapfenartigen Vorsprünge (23) zur Ausfüllung aller Durchsteckausnehmungen (21) der Komplementärkontur (19) ausgebildet ist oder sind.

7. Zahnimplantat nach einem der vorhergehenden Ansprüche, **dadurch gekennzeichnet, dass** der in den Implantatkörper (10) einsteckbare Halteabschnitt (14) des Implantatpfostens (11) und die entsprechende Aufnahme (13) im Implantatkörper (10) in der Einsteckrichtung konusförmig verjüngt sind.

8. Zahnimplantat nach einem der Ansprüche 1 oder 3 bis 7, **dadurch gekennzeichnet, dass** der Tragabschnitt (16) des Implantatpfostens (11) zu seinem freien Ende hin konusförmig verjüngt oder zylindrisch oder kugelartig ausgebildet ist.

9. Zahnimplantat nach einem der vorhergehenden Ansprüche, **dadurch gekennzeichnet, dass** der Implantatkörper (10) ein Außengewinde (15) besitzt, vorzugsweise ein konisches und/oder selbstschneidendes Außengewinde.

10. Zahnimplantat nach einem der vorhergehenden Ansprüche, bestehend ganz oder teilweise aus einem Keramikmaterial auf der Basis von Zirkonoxid oder einer Zirkonoxid/Aluminiumoxid-Mischung oder einem anderen nichtmetallischen Material, wobei vorzugsweise wenigstens die ganz oder teilweise aus dem Kieferknochen herausragenden Bestandteile aus dem Keramikmaterial oder nichtmetallischen Material bestehen.

## Claims

1. Dental implant, in particular of ceramic material, with an implant body (10) for anchoring in a jawbone and with an implant post (11) as dental support, insertable in the implant body (10) and lockable by means of a bayonet connection (17) in the form of a push-and-twist connection, and having a retaining section (14) which may be pushed into the implant body (10) and a support section (16) extending out from the implant body (10) in the inserted state, wherein the retaining section (14) of the implant post (11) has a radially protruding locking element assembly (18) which may be inserted in the implant body (10) through a complementary contour (19) and may be locked by turning behind this complementary contour (19), **characterised in that** a coupling element (22) connected to a fixed denture to be anchored, with a recess to accommodate the support section (16) of the implant post (11), has at least one pin-like projection (23) in the axial direction to engage with the complementary contour (19) of the implant body (10).

2. Dental implant according to claim 1, **characterised in that** the recess to accommodate the support section (16) of the implant post (11) is conical,

3. Dental implant according to claim 1 or 2, **characterised in that** the locking element assembly (18) has at least one, preferably a symmetrically distributed number of locking teeth (18), and the complementary contour (19) has one or more corresponding through recesses (21).

4. Dental implant according to any of the preceding claims, **characterised in that** the locking element assembly (18) which is locked or lockable behind the complementary contour (19) is in the form of a clamping locking device, in particular for wedging the retaining section (14) of the implant post (11) in the implant body (10).

5. Dental implant according to any of the preceding claims, **characterised in that** the at least one pin-like projection or projections (23) has or have an adequate length for twist locking of the implant post (11) in the implant body (10).

6. Dental implant according to any of the preceding claims, **characterised in that** one or more of the pin-like projections (23) is or are designed to fill up all through recesses (21) of the complementary contour (19).

7. Dental implant according to any of the preceding claims, **characterised in that** the retaining section (14) of the implant post (11) which may be pushed into the implant body (10) and the corresponding location (13) in the implant body (10) are tapered conically in the direction of insertion.

8. Dental implant according to any of claims 1 or 3 to 7, **characterised in that** the support section (16) of the implant post (11) is designed to taper conically towards its free end or is cylindrical or spherical in form.

9. Dental implant according to any of the preceding claims, **characterised in that** the implant body (10) has an external thread (15), preferably a conical and/or self-tapping external thread.

10. Dental implant according to any of the preceding claims, comprised wholly or partly of a ceramic material based on zirconium oxide or a zirconium oxide/aluminium oxide blend or another non-metallic material, wherein preferably at least those parts protruding wholly or partly out of the jawbone are made of the ceramic material or non-metallic material.

## Revendications

1. Implant dentaire, en particulier en un matériau céramique, comprenant un corps d'implant (10) pour ancrage dans une mâchoire et un montant d'implant (11) servant de support dentaire pouvant être monté dans le corps d'implant (10) et pouvant être bloqué au moyen d'un joint à baïonnette (17) configuré comme un raccord par insertion - rotation qui possède un segment de maintien (14) pouvant être enfiché dans le corps d'implant (10) et possède un segment de support (16) dépassant du corps d'implant (10) à l'état enfiché, le segment de maintien (14) du montant d'implant (11) présentant un dispositif à élément de blocage (18) dépassant radialement qui peut être bloqué par un contour complémentaire (19) du corps d'implant (10) pouvant être inséré dans celui-ci et par rotation à l'arrière de ce contour complémentaire (19), **caractérisé en ce qu'**un élément de couplage (22) présentant lié avec une prothèse dentaire ancrée fixement, un évidement pour recevoir le segment de support (16) du montant d'implant (11) possédant au moins une proéminence (23) de type tenon en direction axiale pour la saisie dans le contour complémentaire (19) du corps d'implant (10).

2. Implant dentaire selon la revendication 1, **caractérisé en ce que** l'évidement pour recevoir le segment de support (16) du montant d'implant (11) est en forme de cône.

3. Implant dentaire selon la revendication 1 ou 2, **caractérisé en ce que** le dispositif à élément de blocage (18) possède au moins un nombre, de préférence, réparti symétriquement, de dents de blocage (18) et le contour complémentaire (19) possède un ou plusieurs évidements débouchants correspondants (21).

4. Implant dentaire selon l'une des revendications précédentes, **caractérisé en ce que** le dispositif à élément de blocage bloqué ou blocable à l'arrière du contour complémentaire (19) est configuré comme un interblocage en particulier, pour bloquer le segment de maintien (14) du montant d'implant (11) dans le corps d'implant (10).

5. Implant dentaire selon l'une des revendications précédentes, **caractérisé en ce qu'**au moins une proéminence en forme de tenon (23) possède une longueur suffisante pour le blocage par rotation du montant d'implant (11) dans le corps d'implant (10).

6. Implant dentaire selon l'une des revendications précédentes, **caractérisé en ce qu'**une ou plusieurs des proéminences en forme de tenons (23) sont conçues pour remplir tous les évidements débouchants (21) du contour complémentaire (19).

7. Implant dentaire selon l'une des revendications précédentes, **caractérisé en ce que** le segment de maintien (14) pouvant être enfiché dans le corps d'implant (10) du montant d'implant (11) et la réception correspondante (13) dans le corps d'implant (10) s'affinent de façon conique dans le sens d'insertion.

8. Implant dentaire selon l'une des revendications 1 ou 3 à 7, **caractérisé en ce que** le segment de support (16) du montant d'implant (11) s'affine de façon conique on est de forme cylindrique ou sphérique à son extrémité libre.

9. Implant dentaire selon l'une des revendications précédentes, **caractérisé en ce que** le corps d'implant (10) possède un filetage extérieur (15), de préférence un filetage extérieur conique et/ou auto-taraudant.

10. Implant dentaire selon l'une des revendications précédentes, constitué en totalité ou en partie d'un matériau de céramique à base d'oxyde de zirconium ou d'un mélange d'oxyde de zirconium/oxyde d'aluminium ou d'un autre matériau non métallique, de préférence au moins les composants dépassant complètement ou partiellement de la mâchoire étant en matériau céramique ou en matériau non métallique.
